(19) Europäisches Patentamt
European Patent Office
Office européen des brevets

(11) Publication number: 0 044 672
B1

(12) # EUROPEAN PATENT SPECIFICATION

(45) Date of publication of patent specification: 11.04.84

(51) Int. Cl.³: C 09 D 3/82, C 08 L 83/04

(21) Application number: 81303138.2

(22) Date of filing: 09.07.81

(54) **Primer compositions containing phenylsiloxane resin and vinylsiloxane polymer.**

(30) Priority: 17.07.80 JP 97974/80

(43) Date of publication of application: 27.01.82 Bulletin 82/4

(45) Publication of the grant of the patent: 11.04.84 Bulletin 84/15

(84) Designated Contracting States: BE DE FR GB IT NL SE

(56) References cited:
FR - A - 2 338 305
FR - A - 2 345 491
US - A - 3 455 762
US - A - 3 873 334

PATENTS ABSTRACTS OF JAPAN, vol. 4, nr. 98, July 15, 1980 page 81 C 18

(73) Proprietor: Toray Silicone Company Limited
2-8 Nihonbashi Muromachi
Chuo-ku Tokyo 103 (JP)

(72) Inventor: Nakasuji, Kasuyoshi
1-6 Yushudai-Nishi
Ichihara-shi Chiba-ken (JP)
Inventor: Kageyama, Katsuaki
1-6 Yushudai-Nishi
Ichihara-shi Chiba-ken (JP)

(74) Representative: Lewin, John Harvey et al,
Elkington and Fife High Holborn House 52/54
High Holborn
London WC1V 6SH (GB)

EP 0 044 672 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Primer compositions containing phenylsiloxane resin and vinylsiloxane polymer

## Background of the invention

### Field of the invention

This invention relates to primer compositions. More precisely, this invention relates to primer compositions which are suitable for bonding heat-curable silicone rubbers on the surface of a variety of materials such as metals and which can impart excellent bond durability even at high temperatures exceeding 200°C under a variety of environments such as air, steam, and oil.

### Description of the prior art

Silicone rubbers have recently been used in a variety of fields requiring rubbery elastomers at high temperatures because silicone rubbers exhibit excellent heat resistance. When these silicone rubbers are used in high temperature environments, they are often used in the form of composites bonded to various base materials, especially metals such as iron, aluminum and stainless steel, and they are also frequently exposed to steam or heat-resistant lubricating oils such as silicone oil. However, the silicone rubber composites deteriorate and the silicone rubber separates at the interface with the base material before their rubber elasticity disappears. Therefore, primers which can maintain a strong long-term bonding strength even under severe conditions are in great demand.

In an attempt to improve the bonding strength under severe conditions, numerous primer compositions have been proposed. For example, the following compositions are known: compositions comprised of a silicone gum, a vinyl-containing silicon oil, a vinylalkoxysilane, and phosphoric acid are described in Japanese Patent No. Sho 52 (1977)-32767; compositions comprised of a silicone gum, a vinyl-containing silicone oil, a polybasic allyl ester, and a fatty acid metal salt are described in Kokai Japanese Patent No. Sho 52 (1977)-26535; compositions comprised of an acryloxypropylalkoxysilane, and a fatty acid iron salt are described in Kokai Japanese Patent No. Sho 55 (1980)-16050. However, these primer compositions also deteriorate when the bonded portion is subjected to long-term exposure to severe conditions under high temperatures and these compositions are therefore not quite satisfactory.

Japanese Kokai Patent No. Sho 55 (1980)-66951, published May 20, 1980, describes a primer composition, which can be used under severe conditions of high temperature in an air atmosphere or in oil. The primer composition is described as containing organopolysiloxanes with a viscosity greater than 0.01 $m^2/s$, a vinyl-containing organopolysiloxane with a viscosity of 0.000005 to 0.01 $m^2/s$, $R^8Si(OR^9)_3$ where $R^8$ is a monovalent unsaturated hydrocarbon radical, $R^9$ is methyl, ethyl, 2-methoxyethyl or 2-ethoxyethyl, and a curing catalyst. Optionally, the composition of Ito et al. can contain an organopolysiloxane resin, a silica filler, and an organic peroxide.

The inventors conducted intensive research in an attempt to improve the drawbacks mentioned above. As a result, it was discovered that when a phenyl-containing polysiloxane resin was used as one of the constituents of a film-forming composition, the prepared compositions exhibit excellent heat resistance; and primer compositions containing this compound as a primary ingredient are described in the EP—A—0044673 (european application 81303139.0 filed on even date) entitled "Primer Compositions Containing Phenylsiloxane Resin". In this invention, it has also been discovered that when both a phenyl-containing polysiloxane resin and a vinyl containing polyorganosiloxane are used as primary ingredients of a film-forming composition, the prepared compositions unexpectedly exhibit excellent bonding strength with any type of substrate and exhibit excellent heat resistance at temperatures above those usable for primer compositions containing just the phenyl-containing polysiloxane resin. Thus, the purposes of this invention were to propose adhesive coating compositions which can maintain bonding strength to metals and other various substrates even in high temperature environments and to propose primer compositions which can maintain a high bonding strength for long periods, even under severe conditions.

## Summary of the invention

This invention relates to a primer composition consisting essentially of (A) 100 parts by weight of an organopolysiloxane resin of the average unit formula

$$R_a(R'O)_bSiO_{\frac{4-a-b}{2}}$$

in which R is a monovalent alkyl, halogenated alkyl, vinyl, allyl, cyanoalkyl or phenyl radical, at least 5 percent of the R radicals being phenyl radicals, R' is a hydrogen atom or an alkyl radical, *a* has a value of from 0.90 to 1.80, and *b* has a value such that the amount of R'O is at least 0.01 percent by weight and up to 20 percent by weight based on the weight of the resin, (B) 10 to 500 parts by weight of a polyorganosiloxane having a viscosity of at least 0.005 $m^2/s$ at 25°C, and an average unit formula

$$R^2_cSiO_{\frac{4-c}{2}}$$

in which $R^2$ is a monovalent alkyl, halogenated

alkyl, cyanoalkyl or vinyl radical, 0.2 to 50 percent of the $R^2$ radicals being vinyl radicals, and *c* has a value from 1.9 to 2.3, (C) 20 to 400 parts by weight of a trialkoxysilane of the general formula:

$$R^3Si(OR^4)_3$$

in which $R^3$ is a vinyl, allyl or acryloxyalkyl radical and $R^4$ is an alkyl radical of 1 to 10 carbon atoms, or a partial hydrolysis condensation product of the trialkoxysilane, (D) 2 to 100 parts by weight of an organic titanate, and (E) an organic solvent.

This invention also relates to a method of adhering silicone rubber to a substrate comprising coating the substrate with the primer composition of this invention, removing the organic solvent to at least form a semisolid forming a primed substrate surface, thereafter applying to the primed substrate surface a composition which cures to a silicone rubber by heating to form a composite, and heating the composite to cure the composition to form a silicone rubber adhered to the substrate through the primer having an adhesion strength resistant to decreasing when exposed to high temperature silicone oil.

Detailed description of the invention

Component (A) of this invention is an organopolysiloxane resin as defined. In the formula, R represents a monovalent alkyl radical such as methyl, ethyl, propyl and octadecyl; vinyl and allyl; phenyl; halogenated alkyl; and cyanoalkyl radical. At least 5% of the R radicals must be phenyl which are directly bonded to a silicon atom. If the proportion of phenyl is less than 5%, the modulus of the film increases and the heat resistance is impaired so that a film with satisfactory durability cannot be obtained. Also, when an organic titanate such as tetra-n-butyl titanate is used as component (C), gelation can occur so that a primer composition cannot be obtained in single-liquid form. The proportion of phenyl groups is preferably 10 to 70% of the R radicals. R′ represents a hydrogen atom or alkyl radical such as methyl, ethyl, propyl and dodecyl. The value of *a* ranges from 0.90 to 1.80. The value of *b* is such that the proportion of silicon-bonded hydroxyl or alkoxy in this resin is at least 0.01 percent by weight and up to 20 percent by weight based on the weight of the resin.

The organopolysiloxane resins possessing silicon-bonded hydroxyl or alkoxy are a primary ingredient of the compositions of this invention and their methods of synthesis are well known. For example, a mixture of one or two more types of chlorosilane or alkoxysilane, selected in such a way that the number of R radicals per silicon atom is 0.90 to 1.80, is hydrolyzed in water or in the presence of a mixture of water and an organic solvent to obtain the organopolysiloxane resins. In this invention, polycondensed organopolysiloxane resins obtained by further heat treatment can be used, as well as, the organopolysiloxane resins directly obtained after hydrolysis. Moreover, mixtures of two or more types of organopolysiloxane resins can also be used. In addition, organopolysiloxane resins in which both hydroxyl groups and alkoxy groups are present in the same molecule are also applicable. These organopolysiloxane resins are used preferably when they are dissolved in organic solvents, especially aromatic solvents such as benzene, toluene or xylene.

Component (B) of this invention is a vinyl-containing polyorganosiloxane. In the formula, $R^2$ represents a monovalent alkyl radical such as methyl, ethyl, propyl and dodecyl; vinyl; halogenated alkyl radical; and cyanoalkyl radical. At least 0.2% of the $R^2$ radicals must be vinyl. The vinyl content of the polyorganosiloxane is such that from 0.2 to 50% of the $R^2$ radicals are vinyl, preferably from 0.5 to 25%. If the proportion of vinyl radical is less than 0.2%, a satisfactory bonding strength cannot be obtained and peeling seems to occur between the primer film and the silicone rubber layer at temperatures of about 230°C and above, especially when immersed in a silicone oil. The reason why the viscosity at 25°C of this polyorganosiloxane must be 0.005 $m^2/s$ or greater is that at a lower viscosity the primer film becomes weaker and the film coated over a substrate is not sufficiently cured.

When a silicone rubber is applied or cured by applying pressure, the primer composition slides and the silicone rubber is not bonded at all or inadequately partially bonded. The viscosity of 25°C of component (B) used in this invention is preferably 0.1 $m^2/s$ or greater.

Examples of the groups at the ends of the molecular chain of this organopolysiloxane are silanol, dimethylvinylsilyl, methylvinylphenylsilyl, trimethylsilyl, dimethylphenylsilyl and methyldiphenylsilyl; however, the terminal groups are not critical.

The mixing proportion of component (B) ranges from 10 to 500 parts by weight per 100 parts by weight of component (A). If the mixing proportion is less than 10 parts by weight, the primer film, at high temperatures, exhibits less affinity for the silicone rubber to be bonded and rubbery elastomeric properties are not obtained so that the primer film does not exhibit suitable stress-strains, especially sharing stress and torsion stress. If the mixing proportion exceeds 500 parts by weight, the bonding strength is also impaired. Preferably the amount of (B) is from 25 to 400 parts by weight.

The trialkoxysilanes used in this invention, component (C), are an essential component which can impart bondability to the composition of this invention. In the formula mentioned above, $R^3$ represents vinyl, allyl, and acryloxyalkyl radicals and $R^4$ represents alkyl radicals of 1 to 10 carbon atoms such as

methyl, ethyl, n-propyl and isopropyl. Preferred examples of these trialkoxysilanes are trialkoxysilanes expressed by the general formula

$$H_2C{=}CH{-}(CH_2)_d{-}Si(OR^4)_3$$

where $d$ is 0 or 1, and trialkoxysilanes expressed by the general formula

$$\begin{array}{l} \qquad\ \ R^6 \quad O \\ \qquad\ \ \ | \quad\ \ \| \\ H_2C{=}C{-}C{-}O{-}R^7{-}Si(OR^4)_3 \end{array}$$

where $R^6$ represents a hydrogen atom or methyl radical, $R^7$ represents an alkylene radical such as methylene, ethylene and propylene.

Examples of these trialkoxysilanes are as follows: vinyltrimethoxysilane, vinyltriethoxysilane, vinyltris($\beta$ - methoxyethoxy)silane, $\gamma$ - methacryloxypropyltrimethoxysilane, $\gamma$ - methacryloxypropyltriethoxysilane, allyltrimethoxysilane and allyltriethoxysilane. The partial hydrolysis condensation products of these trialkoxysilanes can also be used. The mixing proportion of component (C) ranges from 20 to 400 parts by weight per 100 parts by weight of component (A), preferably 25 to 350 parts by weight.

The organic titanates or their partial hydrolysis condensation product are component (D) of this invention. This component is capable of imparting curability to the primer compositions of this invention and an ability to dry in air. In addition, this component has the effect of improving the bonding property and especially the heat resistance. Examples of the organic titanates are the tetraalkyltitanates, such as tetraisopropyl titanate, tetra-n-butyl titanate, butyl titanate dimer of the formula

$$(C_4H_9O)_3TiOTi(OC_4H_9)_3,$$

tetra(2-ethylhexyl) titanate, and their polymers. In this invention, if desirable, titanium chelates such as titanium acetylacetonate, of the formula

$$(C_3H_7O)_2Ti(C_6H_7O_2)_2,$$

polytitanium acetylacetonate, titanium octyl glycolate of the formula

$$(C_4H_9O)_2Ti(C_8H_{16}O_2)_2,$$

titanium lactate of the formula

$$(HO)_2Ti(C_3H_5O_3)_2,$$

titanium lactate ethyl ester of the formula

$$(C_3H_7O)_2Ti(C_5H_9O_3)_2,$$

and triethanolamine titanate of the formula

$$(C_6H_{13}O_3N)_2Ti$$

can be used singly or together with the tetraalkyltitanates. The mixing proportion of component (D) ranges from 2 to 100 parts by weight per 100 parts by weight of component (A).

Component (E) used in this invention is an organic solvent in which the compositions of this invention are dissolved. An appropriate solvent is selected from a consideration of the solubility and volatility during primer coating. Examples of these solvents are as follows: toluene, xylene, benzene, heptane, hexane, trichloroethylene, perchloroethylene, methylene chloride, ethanol, isopropanol, and butanol. These solvents can be used singly or as a solvent mixture of two or more types. In terms of the mixing proportion of the solvent, the compositions of this invention are advantageously dissolved in such a way that the viscosity of the solution is suitable for primer coating, but the mixing proportion of solvent is not particularly critical.

To improve the bonding strength between the substrate and primer film by further improving the air-drying ability of the compositions of this invention, tetraalkoxysilanes expressed by the general formula

$$Si(OR^5)_4$$

where $R^5$ represents an alkyl radical i.e. methyl, ethyl, propyl and butyl or their partial hydrolysis condensation products are added effectively as component (F). Examples of these tetraalkoxysilanes are tetramethoxysilane, tetraethoxysilane, and tetrabutoxysilane. If this tetraalkoxysilane is used, the mixing proportion ranges from 20 to 400 parts by weight per 100 parts by weight of component (A), preferably 40 to 150 parts by weight. The presence of component (F) is desirable to provide a longer air-drying time. The longer air-drying time is needed because component (B) is present.

The compositions of this invention can be easily prepared by simply homogeneously blending components (A) through (E) or components (A) through (F). In order to improve further the strength of the film after curing, a variety of inorganic fillers such as finely pulverized silica can be added. In this case, surface-treated silica filler is suitable as a filler. Moreover, known heat-resisting agents, coloring agents and other additives, e.g., red iron oxide, cerium oxide, cerium hydroxide, cerium salts of fatty acids, iron salts of fatty acids, titanium oxide and carbon black can be arbitrarily added as long as this does not interfere with the purpose of this invention.

The primer compositions of this invention are coated on a substrate. After the substrate is coated, the organic solvent is removed by air drying or by heating. One conveneint method of organic solvent removal is to let the coating air dry. The length of time for a specific primer composition to air dry will vary with the kind of

solvent used, the solvent content, the kind of catalyst, and the kind of alkoxy radical. However, the air-drying time should be sufficient to at least from a semisolid from the primer composition. For best results, the air-drying time should be at least 30 minutes, preferably longer.

After the organic solvent has been removed from the primer composition, a silicone rubber composition which cures by heating can be applied over the primed substrate surface to form a composite. The composite is then heated to cure the silicone rubber composition resulting in a silicone rubber adhered to the substrate through a primer.

When the compositions of this invention are used as primers, a silicone rubber can be strongly bonded on the surface of various metals such as iron, aluminum, nickel, chromium, zinc, and copper or their alloys, and synthetic resin materials such as acrylic resins, phenolic resins, and epoxy resins. In addition, there is the excellent effect that the bond strength is not impaired despite exposure to oils and steam at high temperatures, especially at or above 230°C. Using this excellent characteristic, the compositions of this invention are effectively used as primers when a silicone rubber is to be bonded with an oil-seal housing, with the core metal of the rollers in a copier, with engine-mounted core metals and with other metals.

Preferred primer compositions are those which contain acryloxyalkyltrialkoxysilanes. One preferred embodiment are primer compositions in which the organopolysiloxane resin of (A) has at least 5 percent of the R as phenyl and the remainder as methyl, *a* has a value of 1.1 to 1.6. R' is hydrogen atom, and *b* has a value such that the amount of R'O is from 1 to 10 percent by weight, (B) is 25 to 400 parts by weight of the polyorganosiloxane wherein each $R^2$ is methyl or vinyl and 0.5 to 25 percent of the $R^2$ radicals are vinyl, and the viscosity at 25°C is at least 0.1 $m^2/s$, (C) is 25 to 350 parts by weight of acryloxyalkyltrialkoxysilane in which $R^3$ is an alkyl radical of 1 to 3 carbon atoms, (D) is 2 to 100 parts by weight of organic titanate, and (E) is an organic solvent.

Another preferred embodiment are primer compositions in which the organopolysiloxane resin of (A) are those in which 10 to 70 percent of the R radicals are phenyl and the remainder are methyl, *a* has a value of 1.1 to 1.6. R' is hydrogen atom, and *b* has a value from 1 to 5 percent by weight based on the weight of the resin, (B) is 75 to 225 parts by weight of the polyorganosiloxane in which from 1 to 3 percent of the $R^2$ radicals are vinyl and the remainder are methyl, (C) is from 25 to 125 parts by weight of gamma-(methacryloxy)-propyltrimethoxysilane, (D) is from 10 to 50 parts by weight of tetraalkyltitinate, and (E) is present in an amount of 75 to 400 parts by weight organic solvent.

Both of the above preferred embodiments can optionally contain 40 to 150 parts by weight of a tetraalkoxysilane in which the alkoxy radical has from 1 to 3 carbon atoms.

The following examples are presented for illustrative purposes only and should not be construed as limiting the invention which is properly delineated in the claims. In the examples, parts represents parts by weight, % represents percent by weight, Me denotes methyl, Ph denotes phenyl and the viscosities shown are values measured at 25°C.

Example 1

A solution mixture was prepared by thoroughly mixing 100 parts of a methylphenylpolysiloxane resin containing 25 mol % $MeSiO_{3/2}$ units, 37 mol % $PhSiO_{3/2}$ units, 19 mol % $Me_2SiO$ units and 19 mol % $Ph_2SiO$ units and having a hydroxyl content of 2.5% and 100 parts of a hydroxyl endblocked polymethylvinylsiloxane gum containing 97 mol % dimethylsiloxane units and 3 mol % methylvinylsiloxane units having a viscosity of 2 $m^2/s$ in 100 parts of toluene. Subsequently, 100 parts of $\gamma$-methacryloxypropyltrimethoxysilane and 15 parts of tetra-n-butyl titanate were added and the mixture was stirred thoroughly. As a result, a primer composition was prepared as a homogeneous dispersion. This composition was coated over various metal plates such as iron, aluminum, and stainless steel plates and the coats were dried in air at room temperature for 60 minutes.

Subsequently, an unvulcanized silicone rubber molding composition (SH-52U sold by Toray Silicone Co., Ltd., Tokyo, Japan, containing 0.5% 2,5-dimethyl-2,5-di(t-butylperoxy)hexane as cross-linking agent was placed tightly over the above-mentioned primer coated surface in a thickness of 4 mm and the silicone rubber was cured under a pressure of 200 $kg/cm^2$ at a temperature of 170°C. As a result, six test plates were prepared in which the silicone rubber as strongly bonded to each metal. The test plates were divided into two portions. One set of these specimens of each metal were immersed in polydimethylsiloxane oil having a viscosity of 0.0001 $m^2/s$ (SH200 sold by Toray Silicone Co., Ltd., Tokyo, Japan) at a temperature of 230°C for 3 days, 10 days or 20 days and then removed. No peeling between metal and rubber layers was found. The remaining test plates were placed in a stationary manner in a heated oven at a temperature of 230°C for 3 days, 10 days, or 20 days and removed. No peeling was found between the metal plate and the silicone rubber.

For comparison, a composition was prepared by the above method without using the polymethylphenylsiloxane resin among the compositions mentioned above. The same test was conducted as was mentioned above. Peeling between the silicone rubber and the

metal plates occurred after 3 days of standing in both tests.

Example 2

The same mixed solution of methylphenylpolysiloxane resin and polymethylvinylsiloxane gum as in Example 1 was mixed with γ-methacryloxypropyltrimethoxysilane, vinyltrimethoxysilane, tetrapropoxysilane, and tetra-n-butyl titanate in the various proportions shown in Table I and a variety of primer compositions were prepared. Using the primer compositions obtained as above, the same silicone rubber compound as in Example 1 was bonded to iron and aluminum plates under the same conditions as in Example 1. The test plates were divided into two portions. One set of specimen was immersed in polydimethylsiloxane oil, as defined in Example 1, at 230°C for 1 day, 10 days, or 20 days and removed. The bond status was then examined and the results are shown in Table II. The results for iron and aluminum were the same.

The other specimen was placed in a heated oven at 230°C and left standing for 1 day, 10 days, or 20 days. After taking out the specimen, the bond status was examined and the results are also shown in Table II. The results for the iron and aluminum were the same.

For comparison, primer compositions were also prepared from the same ingredients mentioned above without using the methylphenylpolysiloxane resin or tetra-n-butyl titanate and the same tests mentioned above were conducted. The results are also shown in Table II. Comparative Example G gelled some during preparation, and test plates were prepared.

Example 3

A primer composition was prepared by mixing 100 parts of a hydroxyl endblocked polymethylvinylsiloxane gum consisting of 95 mol % dimethylsiloxane units and 5 mol % methylvinylsiloxane units and having a viscosity of 0.5 $m^2/s$, 100 parts of γ-methacryloxypropyltrimethoxysilane, 15 parts of tetra-n-butyl titanate and toluene with 100 parts of methylphenylpolysiloxane resin having a methoxy content of 1.2% and consisting of 15 mol % $MeSiO_{3/2}$ units, 35 mol % $PhSiO_{3/2}$ units, 40 mol % $Me_2SiO$ units, and 10 mol % $Ph_2SiO$ units to obtain a homogeneous dispersion. This composition was coated over iron, aluminum, and stainless steel metal plates and the coats were dried in air at room temperature for 60 minutes. Subsequently, unvulcanized silicone rubber molding composition as described in Example 1 containing 0.5% di-t-butylperoxide as crosslinking agent was placed tightly over the abovementioned primer-coated surface in a thickness of 4 mm and the silicone rubber was cured under a pressure of 200 $kg/cm^2$ at a temperature of 170°C for 10 minutes. As a result, test plates were obtained in which the silicone rubber was strongly bonded to the metal. Also test plates were immersed in polydimethylsiloxane oil having a viscosity of 0.001 $m^2/s$ (SH200 from Toray Silicone Co., Ltd., Tokyo, Japan) at 230°C and taken out after 10 days. The bond status was examined. No peeling of the silicone rubber was found.

TABLE I

| Primer composition | This invention A | B | C | D | Comparative Examples E | F | G |
|---|---|---|---|---|---|---|---|
| Components | | | | | | | |
| Methylphenylsiloxane Resin, parts | 100 | 100 | 100 | 100 | — | 100 | 100 |
| Polymethylvinylsiloxane, parts | 200 | 200 | 200 | 200 | 200 | 200 | 200 |
| Vinyltrimethoxysiloxane, parts | 100 | — | — | — | 100 | 100 | — |
| γ-methacryloxypropyltrimethoxysilane, parts | — | 100 | 100 | 50 | — | — | — |
| Tetrapropoxysilane, parts | — | — | 100 | 50 | — | — | — |
| Tetra-n-butyltitanate, parts | 15 | 15 | 15 | 15 | 15 | — | 15 |

TABLE II

| Primer composition | This invention A | B | C | D | Comparative Examples E | F | G |
|---|---|---|---|---|---|---|---|
| Oil Immersion Test at 230°C | | | | | | | |
| 1 day | O | O | O | O | X | X | X |
| 10 days | O | O | O | O | X | X | X |
| 20 days | O | O | O | O | X | X | X |
| Oven test at 230°C | | | | | | | |
| 1 day | O | O | O | O | O | P | X |
| 10 days | O | O | O | O | X | X | X |
| 20 days | O | O | P | O | X | X | X |

O=completely bonded X=completely separated P=partially separated

## Claims

1. A primer composition consisting essentially of

(A) 100 parts by weight of an organopolysiloxane resin of the average unit formula

$$R_a(R'O)_bSiO_{\frac{4-a-b}{2}}$$

in which R is a monovalent alkyl halogenated alkyl, vinyl, allyl, cyanoalkyl and phenyl radical, where at least 5 percent of the R are phenyl radicals, R' is a hydrogen atom or an alkyl radical, *a* has a value of from 0.90 to 1.80 and *b* has a value such that the amount of R'O is at least 0.01 percent by weight and up to 20 percent by weight based on the weight of the resin,

(B) 10 to 500 parts by weight of a polyorganosiloxane having a viscosity of at least 0.005 $m^2/s$ at 25°C, and an average unit formula

$$R^2{}_cSiO_{\frac{4-c}{2}}$$

in which $R^2$ is a monovalent alkyl, halogenated alkyl, cyanoalkyl and vinyl radical, where 0.2 to 50 percent of the $R^2$ are vinyl radicals, and *c* has a value from 1.9 to 2.3,

(C) 20 to 400 parts by weight of a trialkoxysilane of the general formula

$$R^3Si(OR^4)_3$$

in which $R^3$ is vinyl, allyl or acryloxyalkyl radical and $R^4$ is an alkyl radical of 1 to 10 carbon atoms, or a partial hydrolysis condensation product of the trialkoxysilane,

(D) 2 to 100 parts by weight of an organic titanate, and

(E) an organic solvent.

2. A primer composition according to claim 1, in which there is also present an ingredient (F) 20 to 400 parts by weight of a tetraalkoxysilane of the general formula

$$Si(OR^5)_4$$

or its partial hydrolysis condensation product, in which $R^5$ is a $C_1$—$C_4$ alkyl radical.

3. A primer composition according to claim 1 or 2, in which $R^3$ is an acryloxyalkyl of the general formula

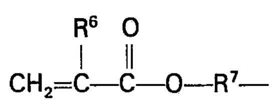

in which $R^6$ is a hydrogen atom or methyl radical and $R^7$ is an alkylene radical.

4. A primer composition according to claim 3, in which $R^4$ is methyl, $R^6$ is methyl, and $R^7$ is propylene.

5. A primer composition according to any of claims 1 to 4, in which the organopolysiloxane resin of (A) has at least 5 percent of the R as phenyl and the remainder being methyl, *a* has a value from 1.1 to 1.6, R' is hydrogen, and *b* has a value such that the amount of R'O is from 1 to 10 percent by weight, (B) is 25 to 400 parts by weight of the polyorganosiloxane wherein each $R^2$ is methyl or vinyl and 0.5 to 25 percent of $R^2$ is vinyl and the viscosity of the polyorganosiloxane at 25°C is at least 0.1 $m^2/s$, and (C) is 25 to 350 parts by weight of trialkoxysilane in which $R^4$ is an alkyl radical of 1 to 3 carbon atoms.

6. A primer composition according to claim 5, in which the organopolysiloxane resin of (A) has from 10 to 70 percent of the R as phenyl and the remainder being methyl, and *b* has a value such that the amount of R'O is from 1 to 5 percent by weight, (B) is 75 to 225 parts by weight of the polyorganosiloxane and from 1 to 3 percent of the $R^2$ are vinyl, (C) is 25 to 125 parts by weight of trialkoxysilane in which $R^4$ is methyl, $R^6$ is methyl, and $R^7$ is propylene, (D) is 10 to 50 parts by weight of a tetraalkyltitanate, and the organic solvent of (E) is present in an amount of 75 to 400 parts by weight.

7. A primer composition according to claim 6, in which the tetraalkyltitanate of (D) is tetrabutyltitanate and the organic solvent is toluene.

8. A primer composition according to claim 5 in which there is also present as the ingredient (F) 40 to 150 parts by weight of a tetraalkoxysilane of the general formula

$$Si(OR^5)_4$$

in which $R^5$ is an alkyl radical of one to three carbon atoms.

9. A primer composition according to claim 3 in which the organopolysiloxane resin of (A) has from 10 to 70 percent of the R as phenyl and the remainder of R being methyl, *a* has a value from 1.1 to 1.6, R' is methyl, and *b* has a value such that the amount of R'O is from 1 to 5 percent by weight, (B) is 75 to 225 parts by weight of the polyorganosiloxane, wherein each $R^2$ is methyl or vinyl and 1 to 3 percent of $R^2$ is vinyl and the viscosity of the polyorganosiloxane at 25°C is at least 0.1 $m^2/s$, (C) is 25 to 125 parts by weight of trialkoxysilane in which $R^4$ is methyl, $R^6$ is methyl, and $R^7$ is propylene, (D) is 10 to 50 parts by weight of a tetraalkyltitanate, and the organic solvent of (E) is present in an amount of 75 to 400 parts by weight.

10. A method of adhering silicone rubber to a substrate comprising

(I) coating the substrate with a primer composition consisting essentially of

(A) 100 parts by weight of an organopolysiloxane resin having an average unit formula

$$R_a(R'O)_bSiO_{\frac{4-a-b}{2}}$$

in which R is a monovalent alkyl, halogenated alkyl, vinyl, allyl, cyanoalkyl and phenyl radical, where at least 5 percent of the R radicals are phenyl, R' is a hydrogen atom or an alkyl radical, *a* has a value of from 0.90 to 1.8, and *b* has a value such that the amount of R'O is greater than 0.01 percent by weight and up to 20 percent by weight, (B) 10 to 500 parts by weight of a polyorganosiloxane having a viscosity of at least 0.005 $m^2/s$ at 25°C, and an average unit formula

$$R^2{}_cSiO_{\frac{4-c}{2}}$$

in which $R^2$ is a monovalent alkyl, halogenated alkyl, cyanoalkyl and vinyl radical where at least 0.2 percent to 50 percent of the $R^2$ are vinyl radicals, and *c* has a value from 1.9 to 2.3, (C) 20 to 400 parts by weight of the trialkoxysilane of the general formula

$$R^3Si(OR^4)_3$$

or its partial hydrolysis condensation product, in which $R^3$ is a vinyl, allyl or acryloxyalkyl radical and $R^4$ is an alkyl radical of 1 to 10 carbon atoms, (D) 2 to 100 parts by weight of an organic titanate, and (E) an organic solvent,

(II) removing the organic solvent to at least form a semisolid, forming a primed substrate surface, thereafter,

(III) applying to the primed substrate surface a composition which cures to a silicone rubber by heating to form a composite, and

(IV) heating the composite to cure the composition to form a silicone rubber adhered to the substrate through the primer having an adhesion strength resistant to decreasing when exposed to high temperature silicone oil.

**Revendications**

1. Une composition primaire d'accrochage constituée essentiellement de

(A) 100 parties en poids d'une résine d'organopolysiloxane ayant la formule de mailles moyenne

$$R_a(R'O)_bSiO_{\frac{4-a-b}{2}}$$

où R est un radical monovalent alcoyle, alcoyle halogéné, vinyle, allyle, cyanoalcoyle ou phényle, au moins 5 pour cent des radicaux R étant des radicaux phényle, R' est un atome d'hydrogène ou un radical alcoyle, *a* vaut de 0,90 à 1,80 et *b* a une valeur telle que la quantité de R'O soit d'au moins 0,01 pour cent en poids et au maximum de 20 pour cent en poids par rapport au poids de la résine,

(B) 10 à 500 parties en poids d'un polyorganosilocane ayant une viscosité d'au moins 0,005 $m^2/s$ à 25°C et la formule de mailles moyenne

$$R^2{}_cSiO_{\frac{4-c}{2}}$$

où $R^2$ est un radical monovalent alcoyle, alcoyle halogéne cyanoalcoyle ou vinyle, 0,2 à 50 pour cent des radicaux $R^2$ étant des radicaux vinyle, et *c* vaut de 1,9 à 2,3,

(C) 20 à 400 parties en poids d'un trialcoxysilane de la formule générale

$$R^3Si(OR^4)_3$$

où $R^3$ est un radical vinyle, allyl ou acryloxyalcoyle et $R^4$ est un radical alcoyle de 1 à 10 atomes de carbone, ou d'un produit de condensation par hydrolyse partielle du trialcoxysilane,

(D) 2 à 100 parties en poids d'un titanate organique, et

(E) un solvant organique.

2. Une composition primaire selon la revendication 1, qui contient, en outre,

(F) 20 à 400 parties d'un tétraalcoxysilane de la formule générale

$$Si(OR^5)_4$$

ou de son produit de condensation par hydrolyse partielle, où $R^5$ est un radical alcoyle en $C_1$—$C_4$.

3. Une composition primaire selon la revendication 1 ou 2, dans laquelle $R^3$ est un radical acryloxyalcoyle de la formule générale

$$CH_2{=}C(R^6){-}C({=}O){-}O{-}R^7{-}$$

où $R^6$ est un atome d'hydrogène ou un radical méthyle, et $R^7$ est un radical alcoylène.

4. Une composition primaire selon la revendication 3, dans laquelle $R^4$ est un radical méthyle, $R^6$ est un radical méthyle et $R^7$ est un radical propylène.

5. Une composition primaire selon l'une quelconque des revendications 1 à 4, dans laquelle les radicaux R de la résine d'organopolysiloxane de (A) sont constitués à raison d'au moins 5 pour cent par des radicaux phényle, le restant étant formé de radicaux méthyle, *a* vaut de 1,1 à 1,6, R' est l'hydrogène, et *b* a une valeur telle que la quantité de R'O soit de 1 à 10 pour cent en poids, (B) est constitué par 25 à

400 parties en poids d'un polyorganosiloxane dans lequel chaque $R^2$ est un radical méthyle ou vinyl, 0.5 à 25 pour cent des $R^2$ étant des radicaux vinyle et la viscosité du polyorganosiloxane à 25°C étant d'au moins 0,1 $m^2/s$, et (C) est constitué par 25 à 350 parties en poids d'un trialcoxysilane dans lequel $R^4$ est un radical alcoyle de 1 à 3 atomes de carbone.

6. Une composition primaire selon la revendication 5, dans laquelle les radicaux R de la résine d'organopolysiloxane de (A) sont constitués à raison de 10 à 70 pour cent par des radicaux phényle, le restant étant formé de radicaux méthyle, et *b* a une valeur telle que la quantité de R'O soit de 1 à 5 pour cent en poids, (B) est constitué par 75 à 225 parties en poids du polyorganosiloxane, 1 à 3 pour cent des $R^2$ étant des radicaux vinyle, (C) est constitué par 25 à 125 parties d'un trialcoxysilane dans lequel $R^4$ est un radical méthyle, $R^6$ est un radical méthyle et $R^7$ est un radical propylène, (D) est constitué par 10 à 50 parties en poids d'un titanate de tétraalcoyle, et le solvant organique de (E) est présent à raison de 75 à 400 parties en poids.

7. Une composition primaire selon la revendication 6, dans laquelle le titanate de tétraalcoyle de (D) est du titanate de tétrabutyle, et le solvant organique est du toluène.

8. Une composition primaire selon la revendication 5, qui contient aussi, en tant qu'ingrédient (F), 40 à 150 parties en poids d'un tétraalcoxysilane de la formule générale $Si(OR^5)_4$ où $R^5$ est un radical alcoyle de 1 à 3 atomes de carbone.

9. Une composition primaire selon la revendication 3, dans laquelle les radicaux R de la résine d'organopolysiloxane de (A) sont constitués à raison de 10 à 70 pour cent par des radicaux phényle, le restant étant formé de radicaux méthyle, *a* vaut de 1,1 à 1,6, R' est un radical méthyle, et *b* a une valeur telle que la quantité de R'O soit de 1 à 5 pour cent en poids, (B) est constitué par 75 à 225 parties en poids d'un polyorganosiloxane dans lequel chaque $R^2$ est un radical méthyle ou vinyle, 1 à 3 pour cent des $R^2$ étant des radicaux vinyle et la viscosité du polyorganosiloxane à 25°C étant d'au moins 0,1 $m^2/s$, (C) est constitué par 25 à 125 parties en poids d'un trialcoxysilane dans lequel $R^4$ est un radical méthyle, $R^6$ est un radical méthyle et $R^7$ est un radical propylène, (D) est constitué par 10 à 50 parties en poids d'un titanate de tétraalcoyle, et le solvant organique (E) est présent à raison de 75 à 400 parties en poids.

10. Un procédé pour faire adhérer un caoutchouc de silicone à un substrat, qui consiste à

(I) revêtir le substrat avec une composition primaire d'accrochage constituée essentiellement de

(A) 100 parties en poids d'une résine d'organopolysiloxane ayant la formule de mailles moyenne

$$R_a(R'O)_bSiO_{\frac{4-a-b}{2}}$$

où R est un radical monovalent alcoyle, alcoyle halogéné, vinyle, allyle, cyanoalcoyle ou phényle, au moins 5 pour cent des radicaux R étant des radicaux phényle, R' est un atome d'hydrogène ou un radical alcoyle, à vaut de 0,90 à 1,80 et *b* a une valeur telle que la quantité de R'O soit supérieure à 0,01 pour cent en poids et au maximum de 20 pour cent en poids,

(B) 10 à 500 parties en poids d'un polyorganosiloxane ayant une viscosité d'au moins 0,005 $m^2/s$ à 25°C et la formule de mailles moyenne

$$R^2_cSiO_{\frac{4-c}{2}}$$

où $R^2$ est un radical monovalent alcoyle, alcoyle halogéné, cyanoalcoyle ou vinyle, ou moins 0,2 à 50 pour cent des radicaux $R^2$ étant des radicaux vinyle, et *c* vaut de 1,9 à 2,3,

(C) 20 à 400 parties en poids d'un trialcoxysilane de la formule générale

$$R^3Si(OR^4)_3$$

ou de son produit de condensation par hydrolyse partielle, où $R^3$ est un radical vinyle, allyle ou acryloxyalcoyle et $R^4$ est un radical alcoyle de 1 à 10 atomes de carbone,

(D) 2 à 100 parts en poids d'un titanate organique, et

(E) un solvant organique,

(II) éliminer le solvant organique pour au moins former une matière semi-solide, de manière à obtenir une surface de substrat apprêtée, puis

(III) appliquer à la surface de substrat apprêtée, une composition qui durcit en un caoutchouc de silicone par chauffage pour former un composite, et

(IV) chauffer le composite pour durcir la composition et faire en sorte que le caoutchouc de silicone adhère au substrat par l'intermédiaire d'une couche primaire ayant une force d'adhésion résistant à la diminution lors d'une exposition à de l'huile de silicone à haute température.

**Patentansprüche**

1. Grundierzusammensetzung bestehend im wesentlichen aus

(A) 100 Gewichtsteilen eines Organopolysiloxanharzes der mittleren Einheitsformel

$$R_a(R'O)_bSiO_{\frac{4-a-b}{2}}$$

in der R ein enwertiger Alkyl-, halogenierter Alkyl-, Vinyl-, Allyl-, Cyanalkyl- und Phenylrest ist, wobei mindestens 5% von R Phenylreste sind, R' ein Wasserstoffatom oder ein Alkylrest ist, *a* einen Wert von 0,90 bis 1,80 hat und *b* einen solchen Wert hat, daß die Menge von R'O mindestens 0,01 Gewichtsprozent und bis zu 20 Gewichtsprozent beträgt, bezogen auf das Gewicht des Harzes,

(B) 10 bis 500 Gewichtsteile eines Polyorganosiloxans mit einer Viskosität von mindestens 0,005 $m^2/s$ bei 25°C und einer mittleren Einheitsformel

$$R^2{}_cSiO_{\frac{4-c}{2}}$$

in der $R^2$ ein einwertiger Alkyl-, halogenierter Alkyl-, Cyanalkyl- und Vinylrest ist, wobei 0,2 bis 50% von $R^2$ Vinylreste sind und *c* einen Wert von 1,9 bis 2,3 hat,

(C) 20 bis 400 Gewichtsteile eines Trialkoxysilans der allgemeinen Formel

$$R^3Si(OR^4)_3$$

in der $R^3$ ein Vinyl-, Allyl- oder Acryloxyalkylrest ist und $R^4$ ein Alkylrest mit 1 bis 10 Kohlenstoffatomen oder ein partielles Hydrolysenkondensationsprodukt des Trialkoxysilans ist,

(D) 2 bis 100 Gewichtsteilen eines organischen Titanats und

(E) einem organischen Lösungsmittel.

2. Grundierzusammensetzung nach Anspruch 1, in der als Bestandteil (F) zusätzlich vorhanden sind 20 bis 400 Gewichtsteile eines tetraalkoxysilans der allgemeinen Formel

$$Si(OR^5)_4$$

oder seines partiellen Hydrolysenkondensationsproduktes, wobei $R^5$ ein $C_1$—$C_4$-Alkylrest ist.

3. Grundierzusammensetzung nach Anspruch 1 oder 2, in der $R^3$ ein Acryloxyalkyl der allgemeinen Formel

$$CH_2{=}\overset{\displaystyle R^6 \atop |}{C}{-}\overset{\displaystyle O \atop \|}{C}{-}O{-}R^7{-}$$

ist, wobei $R^6$ ein Wasserstoffatom oder ein Methylrest ist und $R^7$ ein Alkylenrest ist.

4. Grundierzusammensetzung nach Anspruch 3, in der $R^4$ Methyl, $R^6$ Methyl und $R^7$ Propylen ist.

5. Grundierzusammensetzung nach einem der Ansprüche 1 bis 4, in der das Organopolysiloxanharz (A) mindestens 5% des R als Phenyl enthält und der Rest Methyl ist, *a* einen Wert von 1,1 bis 1,6 hat, R' Wasserstoff ist und *b* einen solchen Wert hat, daß die Menge von R'O von 1 bis 10 Gewichtsprozent beträgt, (B) 25 bis 400 Gewichtsteile des Polyorganosiloxans ist, wobei jedes $R^2$ Methyl oder Vinyl ist und 0,5 bis 25 Prozent des $R^2$ Vinyl ist und die Viskosität des Polyorganosiloxans bei 25°C mindestens 0,1 $m^2/s$ ist und (C) 25 bis 350 Gewichtsteile Trialkoxysilan ist, wobei $R^4$ ein Alkylrest mit 1 bis 3 Kohlenstoffatomen ist.

6. Grundierzusammensetzung nach Anspruch 5, in der das Organopolysiloxanharz (A) von 10 bis 70 Prozent des R als Phenyl enthält und der Rest Methyl ist und *b* einen solchen Wert hat, daß die Menge von R'O von 1 bis 5 Gewichtsprozent ist, (B) 75 bis 225 Gewichtsteile des Polyorganosiloxans ist und 1 bis 3 Prozent des $R^2$ Vinyl ist, (C) 25 bis 125 Gewichtsteile Trialkoxysilan ist, wobei $R^4$ Methyl ist, $R^6$ Methyl ist und $R^7$ Propylen ist, (D) 10 bis 50 Gewichtsteile Tetraalkyltitanat ist und das organische Lösungsmittel (E) in einer Menge von 75 bis 400 Gewichtsteilen anwesend ist.

7. Grundierzusammensetzung nach Anspruch 6, in der das Tetraalkyltitanat (D) Tetrabutyltitanat ist und das organische Lösungsmittel Toluol ist.

8. Grundierzusammensetzung nach Anspruch 5, in der als Bestandteil (F) zusätzliche 40 bis 150 Gewichtsteile eines Tetraalkoxysilans der allgemeinen Formel

$$Si(OR^5)_4$$

vorhanden sind, wobei $R^5$ ein Alkylrest mit einem bis drei Kohlenstoffatomen ist.

9. Grundierzusammensetzung nach Anspruch 3, in der das Organopolysiloxanharz (A) von 10 bis 70 Prozent des R als Phenyl enthält und der Rest Methyl ist, *a* einen Wert von 1,1 bis 1,6 hat, R' Methyl ist und *b* einen solchen Wert hat, daß die Menge von R'O bon 1 bis 5 Gewichtsprozent beträgt (B) 75 bis 225 Gewichtsteile Polyorganosiloxan ist, wobei jedes $R^2$ Methyl oder Vinyl ist und 1 bis 3 Prozent des $R^2$ Vinyl ist und die Viskosität des Polyorganosiloxans bei 25°C mindestens 0,1 $m^2/s$ beträgt, (C) 25 bis 125 Gewichtsteile Trialkoxysilan ist, wobei $R^4$ Methyl ist, $R^6$ Methyl ist und $R^7$ Propylen ist, (D) 10 bis 50 Gewichtsteile Tetraalkyltitanat ist und das organische Lösungsmittel (E) in einer Menge von 75 bis 400 Gewichtsteilen anwesent ist.

10. Verfahren zum Verbinden eines Siliconkautschuks mit einem Substrat, gekennzeichnet durch

(I) Überziehen des Substrats mit einer Grundierzusammensetzung bestehend im wesentlichen aus

(A) 100 Gewichtsteilen eines Organopolysiloxanharzes der mittleren Einheitsformel

$$R_a(R'O)_bSiO_{\frac{4-a-b}{2}}$$

in der R ein einwertiger Alkyl; halogenierter Alkyl-, Vinyl-, Allyl- Cyanalkyl- und Phenylrest ist, wobei mindestens 5 Prozent der R-Reste Phenyl sind, R' ein Wasserstoffatom oder ein Alkylrest ist, *a* einen Wert von 0,90 bis 1,8 hat und *b* einen solchen Wert hat, daß die Menge von R'O größer als 0,01 Gewichtsprozent und bis zu 20 Gewichtsprozent ist,

(B) 10 bis 500 Gewichtsteile eines Polyorganosiloxans mit einer Viskosität von mindestens 0,005 $m^2/s$ bei 25°C und einer mittleren Einheitsformel

$$R^2_cSiO_{\frac{4-c}{2}}$$

in der $R^2$ ein einwertiger Alkyl-, halogenierter Alkyl-, Cyanalkyl- und Vinylrest ist, wobei mindestens 0,2 bis 50 Prozent des $R^2$ Vinylreste sind und *c* einen Wert von 1,9 bis 2,3 hat,

(C) 20 bis 400 Gewichtsteilen eines Trialkoxysilans der allgemeinen Formel

$$R^3Si(OR^4)_3$$

oder seines partiellen Hydrolysenkondensationsproduktes, wobei $R^3$ ein Vinyl-, Allyl- oder Acryloxyalkylrest ist und $R^4$ ein Alkylrest mit 1 bis 10 Kohlenstoffatomen ist,

(D) 2 bis 100 Gewichtsteilen eines organischen Titanats, und

(E) einem organischen Lösungsmittel,

(II) Entfernen des organischen Lösungsmittels, damit mindestens ein Halbfeststoff entsteht, Bilden einer grundierten Substratoberfläche, danach

(III) Aufbringen auf der grundierten Substratoberfläche einer Zusammensetzung, die einen Siliconkautschuk beim Erwärmen unter Bildung eines Verbundkörpers aushärtet, und

(IV) Erwärmen des Verbundkörpers zur Aushärtung der Zusammensetzung, um einen an das Substrat durch das Grundiermittel haftenden Silikonkautschuk zu bilden, der eine Haftfestigkeit hat, die gegen Abnahme bei der Einwirkung von Siliconöl bei hoher Temperatur beständig ist.